(19) Europäisches Patentamt / European Patent Office / Office européen des brevets

(11) **EP 3 564 004 B1**

(12) **EUROPEAN PATENT SPECIFICATION**

(45) Date of publication and mention
of the grant of the patent:
**03.11.2021 Bulletin 2021/44**

(21) Application number: **17889338.4**

(22) Date of filing: **18.10.2017**

(51) Int Cl.:
**B29C 45/00** (2006.01)     **B29C 45/70** (2006.01)
**B29C 45/26** (2006.01)     **B29C 44/58** (2006.01)
**B29C 45/17** (2006.01)     B29K 105/04 (2006.01)
B29L 31/00 (2006.01)     **B29C 44/42** (2006.01)

(86) International application number:
**PCT/JP2017/037730**

(87) International publication number:
**WO 2018/123221 (05.07.2018 Gazette 2018/27)**

(54) **METHOD FOR PRODUCING CONTAINER FOR FOODS**

LEBENSMITTELBEHÄLTERHERSTELLUNGSVERFAHREN

PROCÉDÉ DE FABRICATION D'UN RÉCIPIENT ALIMENTAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.12.2016 JP 2016255542**

(43) Date of publication of application:
**06.11.2019 Bulletin 2019/45**

(73) Proprietors:
• **Bando Chemical Industries, Ltd.
Kobe-shi, Hyogo 650-0047 (JP)**
• **Nissin Foods Holdings Co., Ltd.
Osaka-shi, Osaka 532-8524 (JP)**

(72) Inventors:
• **ICHIKI, Tomohito
Kobe-shi
Hyogo 650-0047 (JP)**
• **MATSUMOTO, Saki
Kobe-shi
Hyogo 650-0047 (JP)**
• **HASHIMOTO, Kenji
Osaka-shi
Osaka 532-8524 (JP)**
• **MATSUZAKI, Manabu
Osaka-shi
Osaka 532-8524 (JP)**

(74) Representative: **Mewburn Ellis LLP
Aurora Building
Counterslip
Bristol BS1 6BX (GB)**

(56) References cited:
WO-A1-02/053347     JP-A- H11 227 733
JP-A- H11 227 733     JP-A- 2000 037 744
JP-A- 2001 030 285     JP-A- 2002 036 345
JP-A- 2006 056 008     JP-A- 2006 056 008
JP-A- 2006 082 452     JP-B1- 6 043 897
US-A1- 2015 064 404

**Description**

Technical Field

The present invention relates to a method for producing a container for foods. More specifically, the present invention relates to a method for producing a container for foods which has depth.

Background Art

A foamed molded article is suitable as a container for foods, as it has the advantages of being lightweight, being capable of reducing the amount of materials to be used, being excellent in heat insulating properties, and others. The foamed molded article can be generally produced by molding a resin composition filled in a metal mold while foaming the resin composition. As methods of foaming, for example, a method for decomposing a foaming agent in a resin composition and a method for injecting a gas into the resin composition are known. In recent years, a method of injecting a fluid in a supercritical state (hereinafter also referred to as "supercritical fluid") into a resin composition has also been investigated. In addition, as for the molding of a resin composition, it is also known to use, for example, injection molding. The methods for producing such foamed molded articles are disclosed, for example, in Patent Literatures 1 to 4.
In the foamed molded article using a method of injection molding a resin composition impregnated with a supercritical fluid (hereinafter also referred to as "a supercritical injection molding method"), it is known that appearance defects occur such as swirl marks in which foam marks remain on the surface of the molded article, and silver streaks in which traces of a flow of the supercritical fluid remain on the surface of the molded article. As for these conventionally known appearance defects, it has been investigated to suppress the defects by a method of increasing a pressure in the metal mold, a method of increasing a mold temperature at the time of injection molding, or the like. In addition, in Patent Literature 4, it is described that a method of subjecting a cavity surface on at least one of a fixed side mold and a movable side mold in the metal mold for molding a foamed structure to graining treatment to form asperities deeper than the swirl marks originating in foam molding is investigated as a method for reducing the swirl marks, and that a foam structure can be thereby molded in which the swirl marks are inconspicuous and the appearance is adequate.

Citation List

Patent Literature

Patent Literature 1
Japanese Patent Laid-Open No. 2002-067111
Patent Literature 2
Japanese Patent Laid-Open No. 2003-231148
Patent Literature 3
Japanese Patent No. 5283710
Patent Literature 4
Japanese Patent Laid-Open No. 2006-056008

Summary of invention

Technical Problem

On the other hand, the present inventors have investigated to form a container for foods having depth, with the use of a supercritical injection molding method, and during the investigation, found out that the appearance defects such as wrinkles and blisters which are different from the conventionally known appearance defects tend to be formed in certain regions of the container for foods having depth. When the above described wrinkles are formed, the appearance is impaired, and when the above described blisters are formed, the strength of the container decreases.
The present invention is designed with respect to the above described present situation, and is directed to providing a method for producing a container for foods which can suppress occurrences of wrinkles and blisters when a molten resin containing a supercritical fluid and a resin composition is injection molded to form the container for foods having depth, and can produce the container for foods which is excellent in heat insulating properties.

Solution to Problem

The present inventors have firstly investigated a portion in which wrinkles and blisters tend to be formed when a container for foods having depth (for instance, bowl shape) has been formed with the use of a supercritical injection molding method. As a result, the present inventors have found out that wrinkles and blisters tend to be formed particularly on a lateral side portion of the container and on a curved side portion between an underside portion and the lateral side portion. According to the investigation by the present inventors, such wrinkles and blisters are peculiar to a foamed molded article using the supercritical injection molding method. In addition, it has been found that the above described wrinkles and blisters are different from the conventionally known appearance defects such as swirl marks and silver streaks, and cannot be eliminated but rather deteriorate by increasing the pressure in the metal mold and/or the mold temperature at the time of injection molding.

The present inventors have further made an extensive investigation; have found out that it is possible to effectively suppress the occurrence of wrinkles and blisters, by applying asperity finishing in the regions corresponding to the portions in the cavity in the metal mold, at which the above described wrinkles and blisters tend to be formed, so as to control an arithmetic mean roughness of the mold surface that faces the cavity of the metal mold to 0.5 $\mu$m or larger and 10 $\mu$m or smaller, and so as to control a ten-point mean roughness of the mold surface that faces the cavity of the metal mold to 2 $\mu$m or larger and 60 $\mu$m or smaller; and have accomplished the present invention.

The present invention is a method for producing a container for foods having depth according to claim 1.

The mold surfaces that face the cavity of the second region and the third region have preferably the arithmetic mean roughness of 0.5 $\mu$m or larger and 6 $\mu$m or smaller, and the ten-point mean roughness of 2 $\mu$m or larger and 50 $\mu$m or smaller.

The mold surface which faces the cavity of the first region has preferably the arithmetic mean roughness of 0.5 $\mu$m or larger and 10 $\mu$m or smaller.

The mold surface which faces the cavity of the first region has more preferably the arithmetic mean roughness of 0.5 $\mu$m or larger and 6 $\mu$m or smaller.

Furthermore, the cavity includes a fourth region that forms an outer edge portion which is arranged so as to form an angle with the lateral side portion, from the lateral side portion toward the flow end, wherein the mold surface which faces the cavity of the fourth region has preferably the arithmetic mean roughness of 0.5 $\mu$m or larger and 10 $\mu$m or smaller.

The mold surface that faces the cavity of the fourth region has more preferably the arithmetic mean roughness of 0.5 $\mu$m or larger and 6 $\mu$m or smaller.

An average particle diameter of the foamed particles in the cross section of the container for foods having depth is preferably 100 $\mu$m or smaller.

Advantageous Effects of Invention

According to the method for producing the container for foods of the present invention, a container for foods can be produced which is excellent in heat insulating properties and has depth with the use of the supercritical injection molding method, while occurrences of wrinkles and blisters are suppressed.

Brief Description of the Drawings

[Figure 1] Figure 1 shows a schematic view for describing one example of a method for producing a container for foods by using a supercritical injection molding apparatus.

[Figures 2] Figures 2 show magnified cross-sectional views showing a periphery of the cavity of the metal mold in Figure 1, for describing core back; and Figure 2(a) shows an initial state before the core back, and Figure 2(b) shows an expanded state after the core back.

[Figure 3] Figure 3 shows a magnified schematic cross-sectional view showing one example of the metal mold which is used in the supercritical injection molding apparatus and is shown in Figure 1.

[Figure 4] Figure 4 shows a schematic plan view of the metal mold shown in Figure 3, as viewed from a resin injection port side.

[Figure 5] Figure 5 shows a magnified schematic cross-sectional view showing another example of the metal mold which is used in the supercritical injection molding apparatus and is shown in Figure 1.

[Figure 6] Figure 6 shows a schematic plan view of the metal mold shown in Figure 5, as viewed from the resin injection port side.

[Figure 7] Figure 7 shows a perspective view showing one example of a container for foods having depth which is produced by the method for producing the container for foods of the present invention.

[Figure 8] Figure 8 shows a schematic cross-sectional view taken along the line X-Y in Figure 7.

[Figure 9] Figure 9 shows a schematic plan view of the container for foods shown in Figure 7.

[Figure 10] Figure 10 shows a magnified schematic cross-sectional view showing a cross section of Figure 8.

[Figure 11] Figure 11 shows a schematic cross-sectional view showing another example of the container for foods having depth which is produced by the method for producing the container for foods of the present invention.

Description of Embodiments

A method for producing a container for foods in the present invention is a method for producing a container for foods having depth according to claim 1.

In the present invention, the container for foods is produced by injection molding the molten resin which contains the supercritical fluid and the resin composition. Examples of the above described molten resin include such a molten resin that a supercritical fluid is impregnated in a melted resin composition, and the molten resin is preferably a single phase melt of the resin composition and the supercritical fluid. Such a molten resin can be produced by an operation of injecting a supercritical fluid which has been produced by a conventionally known supercritical fluid generator, into a melted resin composition under high pressure, and further stirring the resultant resin composition. As for the supercritical fluid, a supercritical fluid of an inert gas is used such as carbon dioxide, nitrogen, argon and helium, for example. Among the supercritical fluids, the supercritical fluid of carbon dioxide or nitrogen is preferable. The supercritical fluid of the nitrogen is more preferable, because of being excellent in foaming properties. The resin composition in which the supercritical fluid is to be impregnated will be described later in detail.

In the above described supercritical injection molding method, a molten resin containing a supercritical fluid and a resin composition is charged into the cavity of the metal mold, and then is cooled and solidified; and thereby a molded article can be produced which has a precise shape and various shapes according to the shape of the cavity in the metal mold. In addition, when the molten resin containing the supercritical fluid and the resin composition is depressurized at the time of injection molding, phase transition occurs from the supercritical fluid to the gas, accordingly the molten resin foams, and a container for foods containing fine air bubbles is obtained. By making many foaming starting points (foaming nuclei) uniformly exist in the molten resin, it is possible to increase the amount of the air bubbles.

A method for producing a container for foods of the present invention includes a step of moving a part of the above described metal mold to expand a volume of the above described cavity (hereinafter referred to as "core back"), before the above described molten resin is solidified which has been charged in the above described cavity. By forcibly expanding the cavity in a state in which a part or all of the molten resin is melted, a sudden pressure decrease is caused, and the foaming amount can be greatly increased. Thereby, air bubbles can be formed throughout the inside of the molten resin which has been charged in the cavity. The metal mold has a male mold having a convex shape and a female mold having a concave shape, and a void that is formed in a state in which the male mold and the female mold are fitted with each other becomes a cavity into which the molten resin is charged. When the volume of the cavity is expanded, at least one part of the male mold and/or the female mold is moved, but in the case or the like where the male mold is a movable side and the female mold is a fixed side, it is preferable to move the whole male mold to expand the volume of the cavity.

It is preferable that the above described core back is started during a period between the time immediately after the molten resin has been charged into the cavity (0 second from completion of charge) and 5 seconds or shorter after the completion of the charge. It is preferable that the moving speed (core backing speed) of the metal mold is 0.1 mm/sec or higher. It is preferable that the amount (core back amount) of the expanded gap distance of the metal mold by the core back is 0.5 mm to 10 mm.

It is possible to prepare a molten resin containing a supercritical fluid and a resin composition and mold the molten resin while foaming the molten resin, by using, for example, a supercritical injection molding apparatus in which an injection molding machine and a supercritical fluid generator are connected to each other. Examples of the supercritical injection molding apparatus include, for example, a MuCell injection molding machine ("MuCell" is a registered trademark of Trexel Inc.). Examples of the above described supercritical fluid include supercritical fluids of inert gases such as carbon dioxide, nitrogen, argon and helium. Among the supercritical fluids, the supercritical fluid of the carbon dioxide or the nitrogen is preferable, and the supercritical fluid of the nitrogen is more preferable.

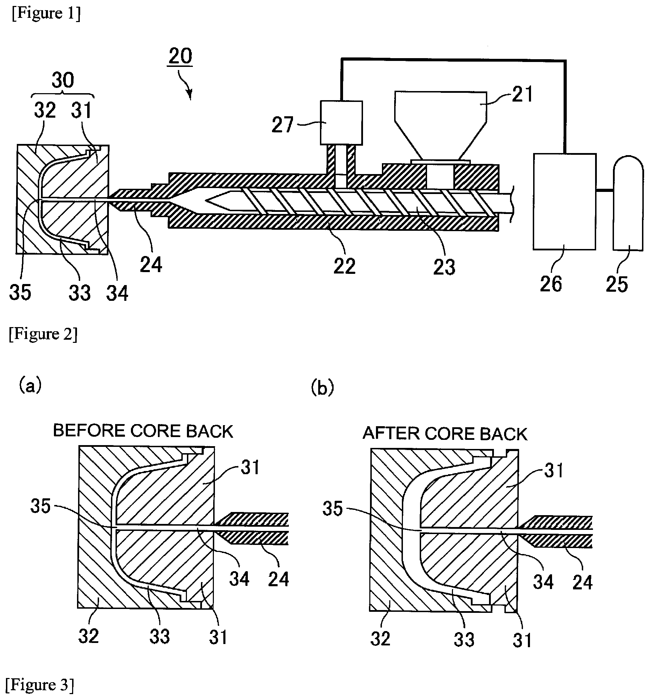

Figure 1 is a schematic view for describing one example of a method for producing a container for foods by using the supercritical injection molding apparatus. In the supercritical injection molding apparatus 20 shown in Figure 1, a supercritical fluid generator which has a cylinder 25, a supercritical fluid generation unit 26 and an injection control unit 27 is connected to an injection molding machine which has a hopper 21, a heating cylinder 22, a screw 23 and a nozzle 24.

The hopper 21 is provided with a container for storing a charged resin material, and drops the resin material from an opening/closing type opening at the bottom of the container into the heating cylinder 22. An appropriate amount of the resin material is transferred to the heating cylinder 22 and is melted therein, by the screw 23 being rotated. Examples of the resin material which is charged into the hopper 21 include a pellet of a resin composition which has been prepared by melt-kneading a mixture of a plurality types of raw materials with the use of an extruding machine. The extruding machine is not limited in particular, and a single-screw or multi-screw extruding machine can be used, but, for example, a twin-screw extruding machine is preferable of which the set temperature is determined to be 200°C or higher. As for a kneading method, it is acceptable to collectively knead all the raw materials, and is also acceptable to knead an arbitrary raw material, then add a remaining raw material, and knead the raw materials. The heating cylinder 22 can heat the inside of the cylindrical space, and can melt the resin material.

In the cylinder 25, an inert gas is filled which is a raw material of a supercritical fluid. The inert gas is sent from the cylinder 25 to the supercritical fluid generation unit 26, and becomes a supercritical fluid there. The supercritical fluid is charged into the heating cylinder 22 from the supercritical fluid generation unit 26 via the injection control unit 27. The injection control unit 27 controls the amount of supercritical fluid to be charged to the resin material which is melted in the heating cylinder 22.

The screw 23 is structured so as to be movable while rotating in the heating cylinder 22, and pushes out the melted resin material and the supercritical fluid toward the tip of the heating cylinder 22, while mixing the substances. By this mixing, a single phase melt of the melted resin material and the supercritical fluid (molten resin containing supercritical fluid and resin composition) is formed. The molten resin containing the supercritical fluid and the resin composition is extruded by the screw 23, is conveyed to the nozzle 24 side, and is injected into the metal mold 30 from the nozzle 24, by an appropriate amount.

The metal mold 30 has the male mold 31 having a convex shape and the female mold 32 having a concave shape, and the cavity 33 is formed between the male mold 31 and the female mold 32. The molten resin injected from the nozzle 24 is charged into the cavity 33 from the resin injection port 35 through a runner 34. The supercritical fluid causes the phase transition to the gas at the time when the supercritical fluid has reached the critical pressure, due to a pressure loss in the metal mold 30, and air bubbles result in being formed in the molten resin. Furthermore, as shown in Figure 2, it is possible to retract the male mold 31 before the cooling and solidification of the molten resin proceeds, perform the core back which expands the cavity 33, so as to accelerate the pressure reduction, and promote the foaming of the molten resin in the cavity 33. Figures 2 are magnified cross-sectional views showing a periphery of the cavity of the metal mold in Figure 1, for describing the core back; and Figure 2(a) shows an initial state before the core back, and Figure 2(b) shows an expanded state after the core back.

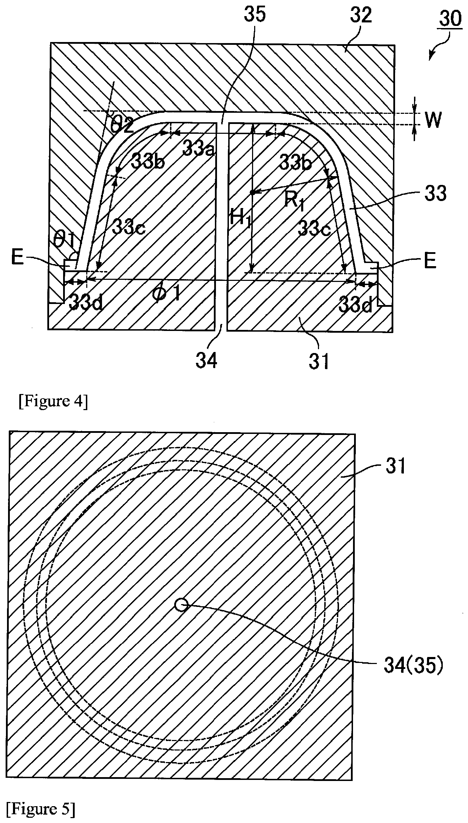

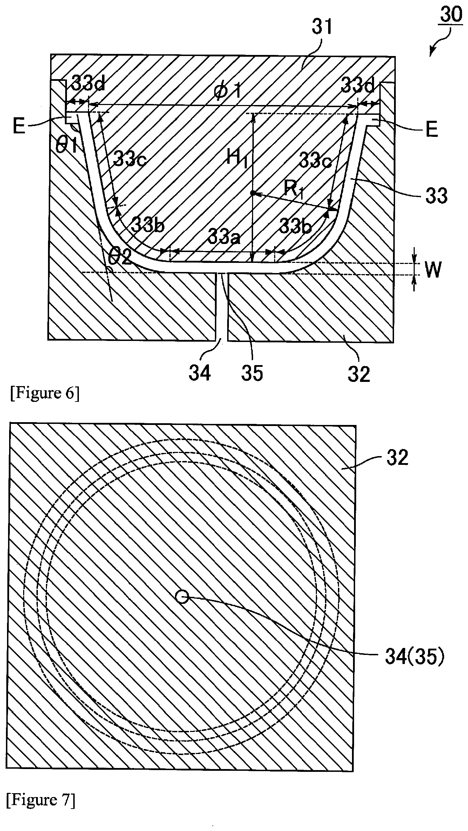

Figure 3 is a magnified schematic cross-sectional view showing one example of the metal mold which is used in the supercritical injection molding apparatus and is shown in Figure 1; and Figure 4 is a schematic plan view of the female mold of the metal mold shown in Figure 3. Figure 5 is a magnified schematic cross-sectional view showing another example of the metal mold which is used in the supercritical injection molding apparatus and is shown in Figure 1; and Figure 6 is a schematic plan view of the female mold of the metal mold shown in Figure 5. Figure 3 and Figure 4 are schematic views of the metal molds in which the resin injection port 35 is formed in the male mold 31; and Figure 5 and Figure 6 are schematic views of the metal molds in which the resin injection port 35 is formed in the female mold 32. Figure 4 and Figure 6 are plan views of the metal molds which are viewed from the resin injection port side. As shown in Figures 3 to 6, it is preferable that the number of the resin injection ports 35 communicated with the cavity 33 is one per one cavity 33. Thereby, it does not occur that the molten resins which have been injected from the separate injection ports collide with each other in the cavity 33, and accordingly it is possible to more effectively prevent blisters and foaming failure on the surface of the molded article from occurring in a wide range. In addition, as shown in Figure 4 and Figure 6, it is preferable to provide the resin injection port 35 at a position corresponding to the underside portion. Thereby, it becomes possible to diffuse the molten resin to the whole in the cavity 33 from the resin injection port 35 at a uniform radial speed, and accordingly it becomes possible to more effectively prevent wrinkles and blisters of the surface of the container 10 for foods. It is more preferable to provide the resin injection port 35 at a position corresponding to the center of the underside portion.

The cavity 33 includes a first region 33a that forms an underside portion of the container for foods having depth, a second region 33b that forms a curved side portion, and a third region 33c that forms a lateral side portion, from a resin injection port 35 toward a flow end E. As shown in Figure 3, the first region 33a may be a flat shape, or the whole or a part may also be curved toward the male mold 31 side. For example, the center of the curved portion of the first region 33a may be the same as the center of the resin injection port 35 of the male mold 31. The cavity 33 may further include a fourth region 33d that forms an outer edge portion from the lateral side portion toward the flow end E, which is arranged so as to form an angle with the above described lateral side portion. The above described flow end E means the end portion of the cavity 33 which is farthest away from the resin injection port 35. The angle θ1 formed between the third region 33c and the fourth region 33d is, for example, 95° to 135°. As shown in Figures 3 to 6, in the case where the resin injection port 35 is arranged at the center of the underside portion (center of underside portion), the end of the fourth region 33d is the flow end E. In the case where the cavity 33 does not include the fourth region 33d, the end of the third region 33c is the flow end E. It is preferable that distances from the resin injection port 35 to the flow end E are substantially equal.

Though the detail will be described later, the container 10 for foods having depth which is produced with the use of the method for producing the container for foods according to the present invention, is acceptable as long as the container includes an underside portion 10a, a lateral side portion 10c, and a curved side portion 10b arranged between the underside portion 10a and the lateral side portion 10c. According to the investigation of the present inventors, the container 10 for foods in which the resin composition is foamed by the supercritical injection molding method tends to cause wrinkles and blisters in the curved side portion 10b and the lateral side portion 10c. More specifically, wrinkles and blisters tend to occur on the inner side of the curved side portion 10b, and blisters tend to occur on the outer side of the curved side portion 10b and the outer side of the lateral side portion 10c. Because of this, an asperity finish (graining finish) is applied on surfaces that face the cavity of the second region 33b which corresponds to the curved side portion 10b and the third region 33c which corresponds to the lateral side portion 10c, and thereby the occurrence of appearance defects can be significantly suppressed. The reason for this is considered to be because the molten resin easily convects in a region in which the asperity finish is applied to the surface of the cavity, the surface area of the cavity increases and the solidification rate of the molten resin in the outer surface (for example, skin layer) of the container 10 for foods increases, and thereby the occurrence of wrinkles and blisters can be suppressed. In each of the first to fourth regions 33a, 33b, 33c and 33d, the above described asperity finish may be applied on at least one of the surface of the male mold 31 contacting the inner surface of the container 10 for foods and the surface of the female mold 32 contacting the outer surface of the container 10 for foods. It is preferable that the asperity finish is applied on both of the surface of the male mold 31 and the surface of the female mold 32 in each of the regions, because the occurrence of wrinkles and blisters can be further suppressed.

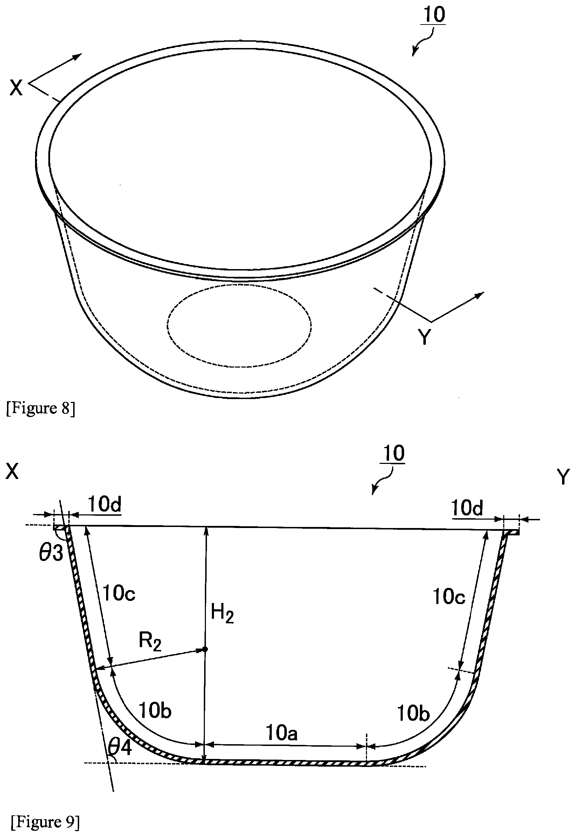

As shown in Figure 4 and Figure 6, the shape of the opening of the metal mold 30 may be round, when the female mold 32 is viewed from the upper side. The diameter $\varphi 1$ (see Figures 3 and 5) of the convex shape of the male mold 31 is, for example, 80 mm to 180 mm. The above described $\Phi 1$ corresponds to the diameter $\varphi 2$ (see Figure 9) of the opening of the obtained container 10 for foods. The height H1 of the convex shape of the male mold 31 (see Figures 3 and 5) is, for example, 35 mm to 100 mm. The above described height H1 corresponds to the height H2 (see Figure 8) of the obtained container 10 for foods. It is preferable that there is a linear portion in each of the first region 33a and the third region 33c, and the angle $\theta 2$ formed between the straight line along the first region 33a and the straight line along the third region 33c is, for example, 95° to 135°. It is preferable that a curvature radius R1 of the second region 33b is 10 mm or larger and 50 mm or smaller. The above described angle $\theta 2$ may be the same angle as the angle $\theta 1$.

The arithmetic mean roughness Ra of the mold surfaces which face the cavity of the second region 33b and the third region 33c is 0.5 $\mu$m or larger and 10 $\mu$m or smaller, and the ten-point mean roughness Rz of the mold surfaces which face the cavity of the second region 33b and the third region 33c is 2 $\mu$m or larger and 60 $\mu$m or smaller. By the above described arithmetic mean roughness and the above described ten-point mean roughness being controlled to the above described ranges, wrinkles and blisters can be suppressed more reliably. If the arithmetic mean roughness Ra of the second region 33b and the third region 33c is less than 0.5 $\mu$m, or the ten-point mean roughness Rz is less than 2 $\mu$m, the occurrence of wrinkles and blisters cannot be sufficiently suppressed. The reason for this is considered to be because the surface roughness of the cavity surface is small and the convection of the molten resin does not occur sufficiently. On the other hand, if the arithmetic mean roughness Ra of the second region 33b and the third region 33c exceeds 10 $\mu$m, or if the ten-point mean roughness Rz exceeds 60 $\mu$m, an unfilled portion is formed when the molten resin is injected into the metal mold, the mold releasability is lowered or the like, and the moldability is lowered. It is preferable that the mold surfaces that face the cavity of the second region 33b and the third region 33c each have an arithmetic mean roughness Ra of 0.5 $\mu$m or larger and 6 $\mu$m or smaller, and a ten-point mean roughness Rz of 2 $\mu$m or larger and 50 $\mu$m or smaller. A preferable lower limit of the above described ten-point mean roughness Rz is 3 $\mu$m. A preferable lower limit of the above described arithmetic mean roughness Ra is 0.9 $\mu$m. In the present specification, "arithmetic mean roughness" means a value which is measured by a method in accordance with JIS B 0601. "Ten-point mean roughness" means a value which is measured by a method in accordance with JIS B 0601.

As shown in Figure 8, the container 10 for foods of the present invention may further include an outer edge portion 10d which is arranged from the upper end of the above described lateral side portion toward the outside of the container, so as to form an angle with the above described lateral side portion. The cavity 33 may include a fourth region 33d which forms the outer edge portion 10d. The surface which faces the cavity of the first region 33a and the surface which faces the cavity of the fourth region 33d may be mirror finished. In the case of the mirror finish, the mold surface which faces the cavity of the first region 33a may have an arithmetic mean roughness Ra, for example, of 0.01 $\mu$m to 0.1 $\mu$m, and the ten-point mean roughness Rz, for example, of 0.03 $\mu$m to 0.5 $\mu$m. In addition, the mold surface which faces the cavity of the fourth region 33d may have an arithmetic mean roughness Ra, for example, of 0.01 $\mu$m to 0.1 $\mu$m, and a ten-point mean roughness Rz, for example, of 0.03 $\mu$m to 0.5 $\mu$m.

From the viewpoint of more effectively suppressing the occurrence of wrinkles and blisters, the asperity finish may be applied on the surface which faces the cavity of the first region 33a and the surface which faces the cavity of the fourth region 33d. It is preferable that the mold surface which faces the cavity of the first region 33a has an arithmetic mean roughness Ra of 0.5 μm or larger and 10 μm or smaller. It is more preferable that the mold surface facing the cavity of the first region 33a has the arithmetic mean roughness Ra of 0.5 μm or larger and 6 μm or smaller. A more preferable lower limit of the arithmetic mean roughness Ra of the above described first region 33a is 0.9 μm. In addition, it is preferable that a ten-point mean roughness Rz of the mold surface which faces the cavity of the first region 33a is 2 μm or larger and 60 μm or smaller. It is more preferable that the ten-point mean roughness Rz of the mold surface which faces the cavity of the first region 33a is 2 μm or larger and 50 μm or smaller. A more preferable lower limit of the arithmetic mean roughness Ra of the above described first region 33a is 3 μm. It is preferable that an arithmetic mean roughness Ra of the mold surface which faces the cavity of the fourth region 33d is 0.5 μm or larger and 10 μm or smaller. It is more preferable that the arithmetic mean roughness Ra of the mold surface which faces the cavity of the fourth region 33d is 0.5 μm or larger and 6 μm or smaller. A more preferable lower limit of the arithmetic mean roughness Ra of the above described fourth region 33d is 0.9 μm. In addition, it is preferable that a ten-point mean roughness Rz of the mold surface which faces the cavity of the fourth region 33d is 2 μm or larger and 60 μm or smaller. It is more preferable that the ten-point mean roughness Rz of the mold surface which faces the cavity of the fourth region 33d is 2 μm or larger and 50 μm or smaller. A more preferable lower limit of the arithmetic mean roughness Ra of the above described fourth region 33d is 3 μm.

The above described asperity finish is applied in order to make the surface of the metal mold rough which faces the cavity of the metal mold 30; and is formed of fine asperities in such a degree as to be capable of being visually confirmed similarly to a degree, for example, of a mat finish. It is preferable that the above described fine asperities are arranged irregularly (randomly). In addition, it is preferable that the above described fine asperities are arranged in a form of a plurality of dots. There is a case where the occurrence of wrinkles and blisters cannot be sufficiently suppressed by linear fine asperities.

It is preferable that the above described asperity finish is arranged in such a way that flow distances from the resin injection port 35 are substantially equal. It is preferable that the above described asperity finish is arranged symmetrically with respect to the resin injection port 35. For example, in the case where the opening of the metal mold is round, it is preferable that the asperity finish is arranged concentrically around the resin injection port 35. The above described asperity finish may be applied on all of the first region 33a, the second region 33b, the third region 33c and the fourth region 33d, but it is preferable not to arrange the asperity finish at a position which faces the resin injection port 35. Examples of a method for forming the above described asperity finish includes a method of masking a region of the metal mold in which the asperity finish is not to be applied, and applying the asperity finish by sand blasting, laser processing or the like.

It is preferable that the average particle diameter of the foamed particles in the cross section of the above described container for foods having depth is 100 μm or smaller. When the average particle diameter of the above described foamed particles exceeds 100 μm, there is a case where the heat insulating properties and the strength decrease. A preferable lower limit of the average particle diameter of the above described foamed particles is 10 μm, the more preferable lower limit is 20 μm, the more preferable upper limit is 90 μm, and the further preferable limit is 80 μm.

It is preferable that the minimum value of the gap distance W of the metal mold 30 in the cavity 33 at the time when the molten resin is charged (before core back) is set at 0.2 mm or larger. In the cavity 33 which defines the shape of the container 10 for foods, the gap distance W of the metal mold 30 results in defining the thickness of the container 10 for foods. In a portion in which the gap distance W of the above described metal mold is less than 0.2 mm, the molten resin cannot be foamed sufficiently, and there is a case where a non-foamed portion free of air bubbles is formed. In the non-foamed portion, there is no heat insulating effect due to the air bubbles, and accordingly adequate heat insulating properties cannot be obtained. In addition, the appearance of the non-colored container 10 for foods normally looks white due to scattering of light due to air bubbles, but the non-foamed portion appears transparent; and accordingly when the non-foamed portion is formed, the appearance of the container 10 for foods results in looking non-uniform. It is preferable that the gap distance W of the above described metal mold 30 is set at 3 mm or shorter. In the portion in which the gap distance W of the above described metal mold 30 exceeds 3 mm, the cooling and solidification time period becomes long, and accordingly there is a case where the container 10 for foods results in being deformed by a take-out operation for the molded article from the metal mold 30 and/or by a foaming residue (portion in which foaming power remains and resin is insufficiently solidified); and in addition, the foaming of the molten resin tends to occur relatively easily, and accordingly the advantage of adopting the mold structure of the present invention becomes little. It is preferable that the gap distance W of the above described metal mold is in a range of 0.2 to 3.0 mm. A more preferable upper limit of the above described gap distance W is 1.2 mm. When the above described gap distance W is set at 1.2 mm or shorter and a thin container for foods is formed by a conventional foam injection molding method, wrinkles and blisters tend to easily occur; and accordingly by using the method for producing the container for foods of the present invention, the occurrence of wrinkles and blisters can be more effectively suppressed. The production method according to the present invention can suppress the occurrence of wrinkles and blisters on the surface even if the wall thickness is thinned, and accordingly can produce the container 10 for foods which is lighter in weight and is more excellent in heat insulating properties than the conventional container.

It is preferable that the injection speed of the above described molten resin to the cavity 33 is set at 20 to 200 mm/sec. When the above described injection speed exceeds 200 mm/sec, the internal pressure of the metal mold increases at the time of injection molding, and the life of the metal mold may be shortened. In addition, burrs tend to occur in the obtained container for foods. It is preferable to set the speed to such a degree that the above described molten resin flows without being solidified on the way of being molded, from the viewpoint of improving filling properties and transfer properties of the metal mold. The above described injection speed is more preferably 60 to 140 mm/sec, and is further preferably 100 to 120 mm/sec.

It is preferable that the mold temperature is set so as to improve the releasability, the transfer properties of the mold surface and the fluidity of the molten resin, in a well-balanced manner. The above described mold temperature is preferably 30 to 90°C, more preferably is 40 to 80°C, and further preferably is 50 to 60°C.

The container 10 for foods having depth produced by the method for producing the container for foods according to the present invention can exhibit a heat insulating effect due to the air bubbles, and accordingly can be suitably used as a heat-resistant container. Hereafter, the container for foods having depth produced by the method for producing the container for foods according to the present invention will be described while taking a bowl shape as one example, with reference to Figures 7 to 9. Figure 7 is a perspective view showing one example of the container for foods having depth produced by the method for producing the container for foods according to the present invention. Figure 8 is a schematic cross-sectional view taken along the line X-Y in Figure 7, and Figure 9 is a schematic plan view of the container for foods shown in Figure 7. The container 10 for foods includes: an underside portion 10a; and a lateral side portion 10c; and a curved side portion 10b which is arranged between the underside portion 10a and the lateral side portion 10c. The underside portion 10a is a portion which is grounded when the container 10 for foods is used, and may be recessed toward the inside of the container for foods. By having such a shape, the container 10 for foods can be easily held. In addition, it is preferable that the lateral side portion 10c has a linear portion. A waterline which indicates the water level in the container may be formed in the inside of the lateral side portion 10c. The curved side portion 10b corresponds to a portion in which the lateral side portion 10c rises from the underside portion 10a, and is curved toward the outside of the container 10 for foods.

Furthermore, the container 10 for foods may include an outer edge portion 10d which is formed from the upper end of the lateral side portion 10c toward the outside of the container, so as to form an angle with the lateral side portion 10c. The angle θ3 formed by the lateral side portion 10c and the outer edge portion 10d is, for example, 95° to 135°.

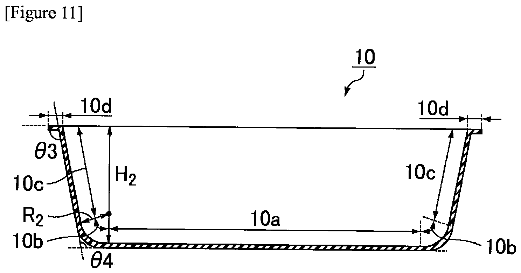

As shown in Figure 9, the shape of the opening of the container 10 for foods may be round, when the container 10 for foods is viewed from the upper side. The inside diameter (diameter of opening) φ2 of the upper end of the lateral side portion 10c is, for example, 80 mm to 180 mm. The height H2 of the container 10 for foods is, for example, 35 mm to 100 mm. The height H2 is, as shown in Figure 8, a distance between an intersection of a perpendicular line heading for the upper end of the lateral side portion 10c from the underside portion 10a with a straight line that connects the lateral side portions 10c which face each other across the opening, and an intersection of the perpendicular line with the underside portion 10a. It is preferable that each of the lateral side portion 10c and the underside portion 10a has a linear portion, and an angle θ4 which is formed by a straight line along the lateral side portion 10c and a straight line along the underside portion 10a is, for example, 95° to 135°. The above described angle θ4 may be the same angle as the angle θ3. It is preferable that the curved side portion 10b has a curvature radius R2 of 10 mm or larger and 50 mm or smaller. As long as the container 10 for foods has the lateral side portion 10c, the size of the lateral side portion 10c is not limited in particular, and a container for foods having a shallow bowl shape is acceptable, for example, as shown in Figure 11.

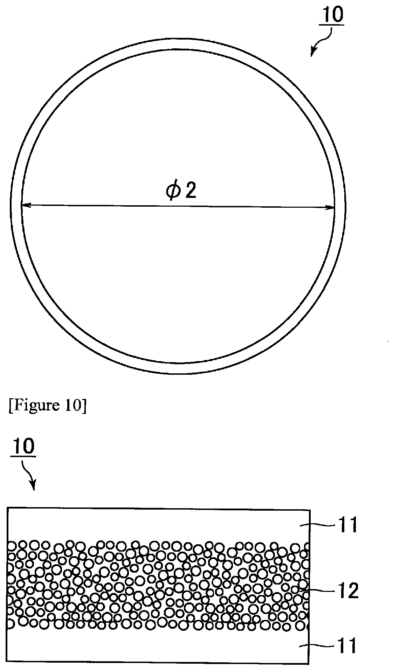

Figure 10 is a magnified schematic cross-sectional view showing a cross section of Figure 8. The container 10 for foods shown in Figure 10 has a structure in which a foamed layer 12 is sandwiched between skin layers (outer skin layers) 11 on the surfaces of both walls of the container 10 for foods. The foamed layer 12 means a region which includes a large number of air bubbles (foamed particles) in the resin, and the skin layer 11 means a region which does not include the air bubbles. The container 10 for foods has a skin layer 11 existing on the surface in which there is no foam, and thereby has a high strength; and a mold surface is transferred directly to the surface. The container 10 for foods has a foamed layer 12 existing in the center portion of the thickness direction thereof, accordingly can not only reduce the weight but also makes it difficult for heat to be transferred, and accordingly is excellent in heat insulating properties. Incidentally, the container 10 for foods shown in Figure 10 is one example of the container for foods produced by the present invention. The structure of the container for foods produced by the present invention, is not limited to a three-layer structure of the skin layer 11/foamed layer 12/skin layer 11.

It is preferable that when the cross section of the container 10 for foods is observed, the above described foamed layer 12 has 100 or more foamed particles in an area of 1 mm × 1 mm in the foamed layer 12, and is preferable that an average particle diameter of 100 randomly selected foamed particles is 100 μm or smaller. The foamed particles can be measured with a scanning electron microscope (SEM), and for example, "S-4800" made by Hitachi High-Technologies Corporation can be used.

In the second region corresponding to the curved side portion of the above described container for foods and the third region corresponding to the lateral side portion, the arithmetic mean roughness of the mold surface facing the cavity of the metal mold which is used for the supercritical injection molding method is set at 0.5 μm or larger and 10 μm or smaller, which can thereby suppress the occurrence of wrinkles and blisters.

The resin composition in which the supercritical fluid is to be impregnated will be described in detail below. As for the above described resin composition, compositions are used which contain, for example, a thermoplastic resin as a main component, and among the compositions, a mixture of polyolefin, polylactic acid and a modified polyolefin which contains a carbonyl group in a molecule is suitably used. The polyolefin and the polylactic acid are incompatible polymers with each other, which do not dissolve in each other, and accordingly even when having been mixed, do not dissolve in each other, and an interface is formed. Accordingly, the interface can be used as foaming starting points (foaming nucleus), in foaming with the use of a supercritical fluid. On the other hand, in order to produce a uniformly foamed container for foods, it is required that the resin composition before foaming is uniformly dispersed. For this reason, a modified polyolefin containing a carbonyl group is added, thereby the polyolefin and the polylactic acid are compatibilized, and the dispersibility is improved. Thereby, it becomes possible to make a large number of fine air bubbles (foamed particles with small particle size) uniformly exist in the inside of the container for foods, and the container for foods can be produced which is excellent in such characteristics as heat insulating properties, strength and light weight properties.

As for the above described polyolefin, it is preferable to use either one or both of polypropylene and polyethylene. The melt mass-flow rate (MFR) of the polypropylene is preferably 5 to 100 g/10 min, and more preferably is 10 to 50 g/10 min. The MFR of the polypropylene is a value which has been measured in accordance with JIS K 7210, at a temperature of 230°C, and under a load of 21.2 N. The MFR of the polyethylene is preferably 5 to 100 g/10 min, and more preferably is 10 to 50 g/10 min. The MFR of the polyethylene is a value which has been measured in accordance with JIS K 7210, at a temperature of 190°C, and under a load of 21.2 N.

The above described polyolefin may contain only polypropylene and/or polyethylene, but may also include polyolefins other than polypropylene and polyethylene.

Examples of polyolefin other than the above include a homopolymer of an α-olefin, an ethylene-propylene copolymer, an ethylene-α-olefin copolymer, and a propylene-α-olefin copolymer. Examples of the above described α-olefins include α-olefins having 4 to 12 carbon atoms such as 1-butene, 1-pentene, 3-methyl-1-butene, 1-hexene, 3-methyl-1-pentene, 4-methyl-1-pentene, 3-ethyl-1-pentene, 1-octene, 1-decene and 1-undecene.

It is preferable that a melt viscosity (220 °C) of the above described polyolefin is 150 Pa·S or higher and 400 Pa·S or lower. A more preferable lower limit of the melt viscosity of the above described polyolefin is 200 Pa·S, and a more preferable upper limit thereof is 300 Pa·S. The above described melt viscosity can be measured, for example, with the use of "Flow Tester CFT-500D" made by Shimadzu Corporation. Specifically, the viscosity characteristics can be evaluated by an operation of heating a resin to be measured to a predetermined temperature to fluidize the resin, extruding the fluidized resin from a cylinder through a capillary die (inside diameter φ of 1 mm, and length of 10 mm) by a piston having a predetermined surface pressure of 1 MPa, and measuring the amount of the movement of the piston and the elapsed time.

It is preferable that the content of the above described polyolefin with respect to the whole resin composition is 30 wt% or more and 80 wt% or less. If the above described content is less than 30 wt%, there is a case where the fluidity and solidification rate of the resin composition decrease and the moldability is aggravated. If the above described content exceeds 80 wt%, there is a case where the foaming properties are aggravated and asperities occur on the surface of the obtained container for foods to be obtained to impair the appearance, or when a resin composition has been mixed with a supercritical fluid, it becomes difficult that the resin composition is impregnated with the supercritical fluid. A preferable lower limit of the content of the polyolefin with respect to the whole resin composition is 35 wt%, and a preferable upper limit is 70 wt%.

The above described polylactic acid is a homopolymer of L-lactic acid, a homopolymer of D-lactic acid, a copolymer of L-lactic acid and D-lactic acid, or a mixture thereof. Crystallinity of the obtained polylactic acid can be adjusted by an operation of changing a method for producing a lactic acid such as a method of adjusting a ratio between mirror image isomers of the lactic acid, a method of copolymerizing the mirror image isomers (random, block, graft or the like), and a method of adding a crystal nucleating agent.

It is preferable that the melt viscosity (220°C) of the above described polylactic acid is 150 Pa·S or higher and 400 Pa·S or lower. A more preferable lower limit of the melt viscosity of the above described polylactic acid is 200 Pa·S, and a more preferable upper limit thereof is 300 Pa·S. The melt viscosity of the above described polylactic acid can be measured similarly to the melt viscosity of the above described polyolefin.

It is preferable that the content of the above described polylactic acid with respect to the whole resin composition is 3 wt% or more and 40 wt% or less. If the above described content is less than 3 wt%, there is a case where the foaming properties of the container for foods which has been molded from the resin composition that has been foamed become insufficient. If the above described content exceeds 40 wt%, there is a case where the fluidity and solidification rate of the resin composition decrease and the moldability is aggravated. A more preferable lower limit of the content of the above described polylactic acid with respect to the whole resin composition is 8 wt%, and a more preferable upper limit thereof is 30 wt%.

The fluidity of the resin composition can be adjusted and the moldability can be satisfied by an operation of controlling the content of the above described polyolefin to a range of 30 wt% to 80 wt%, and controlling the content of the above described polylactic acid to a range of 3 wt% to 40 wt%.

In addition, it is preferable that a difference between the melt viscosities of the above described polyolefin and the polylactic acid is 200 Pa·S or smaller. When the above described melt viscosity difference is 200 Pa·S or smaller, both components are easily mixed. A more preferable upper limit of the above described difference between the melt viscosities is 150 Pa·S.

As for a method of mixing the incompatible polymers with each other, there is case where a method of forming a chemical bond between both of the components, a method of forming a crosslinked structure between the same polymers, or the like is used, and in the case of obtaining the container for foods with the use of polylactic acid, there is a case, for example, where a reactive extrusion (reactive processing) is used which performs kneading while synthesizing the polylactic acid with the use of a synthesis catalyst such as a metal complex, a radical-generating agent or the like. In the case where the interface between the polyolefin and the polylactic acid acts as foaming nuclei, it is not necessary to add a synthetic catalyst, a radical-generating agent or the like to the resin composition, unlike the reactive extrusion of performing kneading while synthesizing the polylactic acid. Incidentally, examples of the reactive extrusion of the polylactic acid include: a method of reacting L-lactide with ε-caprolactone by using tin 2-ethylhexanoate as a synthesis catalyst and adding an antioxidant (for example, "Irganox 1010" made by Ciba Specialty Chemicals Inc.) thereto; a method of reacting polylactic acid with polyethylene glycol with the use of a radical-generating agent such as dicumyl peroxide; and a method of graft polymerizing polylactic acid with polycarbonate, polybutylene adipate terephthalate (PBAT), polycaprolactone (PCL), polybutylene succinate (PBS), polybutylene succinate adipate (PBSA) or the like, with the use of a radical-generating agent.

Examples of the above described modified polyolefin containing the carbonyl group in the molecule include chemical compounds which are obtained by subjecting polyolefin to an addition reaction with an unsaturated carboxylic acid, an ester of an unsaturated carboxylic acid, or an anhydride of an unsaturated carboxylic acid. Examples of the unsaturated carboxylic acid include maleic acid, fumaric acid and itaconic acid. Examples of esters of the unsaturated carboxylic acid include monomethyl maleate, monoethyl maleate, diethyl maleate and monomethyl fumarate. Examples of the anhydrides of the unsaturated carboxylic acid include itaconic acid anhydride and maleic acid anhydride. As for the above described modified polyolefin containing the carbonyl group in the molecule, maleic anhydride modified polyolefin, glycidyl methacrylate modified polyolefin and the like are suitably used. The above described modified polyolefin containing the carbonyl group in the molecule may be used solely, or two or more types thereof may be concomitantly used.

The above described modified polyolefin containing a carbonyl group in the molecule may be a copolymer of an olefin and a vinyl monomer. Examples of the copolymer of the olefin and the vinyl monomer include an ethylene-(meth)acrylic acid copolymer, an ethylene-ethyl (meth)acrylate copolymer, and an ethylene-methyl (meth)acrylate copolymer. Incidentally, the (meth)acrylic acid may be either acrylic acid or methacrylic acid.

The MFR of the above described modified polyolefin containing the carbonyl group in the molecule is preferably 0.1 to 100 g/10 min, and more preferably is 0.3 to 50 g/10 min. The MFR is a value which has been measured in accordance with JIS K 7210, at a temperature of 230°C, and under a load of 21.2 N.

It is preferable that the content of the above described modified polyolefin containing the carbonyl group in the molecule with respect to the whole resin composition is 1 wt% or more and 20 wt% or less. Within this range, it is possible to form an interface between the polyolefin and polylactic acid which form an incompatible system, and effectively improve the dispersibility of both components. If the above described content is less than 1 wt%, there is a case where the foaming properties of the container for foods to be obtained are lowered. If the above described content exceeds 20 wt%, there is a case where odor generation, coloration, aggravation of the moldability, an increase of coefficient of water absorption and the like are caused. A more preferable lower limit of the content of the above described modified polyolefin containing the carbonyl group in the molecule to the whole resin composition is 3 wt%, and a more preferable upper limit thereof is 12 wt%.

The above described resin composition may contain a layer silicate. In the case where the shear force at the time of mixing is insufficient only by mixing the polyolefin and the polylactic acid with the modified polyolefin containing the carbonyl group, the dispersibility between the polyolefin and the polylactic acid is improved and foaming nuclei can be highly dispersed in the resin composition, by an addition of the layer silicate.

Examples of the above described layer silicate include pyrophyllite, talc, kaolin (kaolinite), montmorillonite, fish-eye stone, margarite, prehnite and mica; and in particular, the talc, the kaolin, the montmorillonite and the mica are suitably used. The above described layer silicate may be used solely, or two or more types thereof may be concomitantly used.

It is preferable that the content of the above described layer silicate with respect to the whole resin composition is 10 wt% or more and 40 wt% or less. If the above described content is less than 10 wt%, there is a case where the effect of improving the shearing force at the time of mixing is not sufficiently obtained. If the above described content exceeds 40 wt%, there is a case where the moldability of the resin composition is lowered. A more preferable lower limit of the content of the above described layer silicate to the whole resin composition is 15 wt%, and a more preferable upper limit is 35 wt%.

The above described resin composition may contain a filler other than the layer silicate. As for the filler composed of an inorganic material, for example, metal oxides (magnesium oxide, calcium oxide and the like), graphite, carbon black, molybdenum disulfide, tungsten disulfide, calcium carbonate, silica, silica gel, zeolite, boron nitride and alumina can be used. As for a filler made from an organic material, for example, a fluororesin such as polytetrafluoroethylene (PTFE), ultrahigh molecular weight polyethylene, electron beam crosslinking type polyethylene, aromatic polyamide, aliphatic polyamide, silicon carbide, an acrylic resin, a phenol resin and a melamine resin can be used. The amount of the filler to be blended other than the layer silicate is not limited in particular, but is controlled in such a range as not to exceed, for example, 1 wt% with respect to the whole resin composition.

In the above described container for foods, a surface or the like may be decorated with a pattern, color, letters and/or the like. When such decoration is applied, a pigment filler, a color master batch and the like may be added to the above described resin composition.

The container for foods produced by the method for producing the container for foods in the present invention is excellent in the heat resistance and the heat insulating properties, and is light in weight. The heat resistance of the above described container for foods can be adapted to the heat resistance test of JIS S 2029 7.4 (displayed heat resistance temperature of 120°C), the microwave oven high frequency suitability test of 7.10, and the microwave oven durability test of 7.11. Because of this, the above described container for foods may be used for heating or cooking with the use of a microwave oven. Example

Hereafter, the present invention will be described in more detail with reference to examples, but the present invention is not limited to only these examples.

(Production Example 1)

Polypropylene (PP), polylactic acid (PLA), modified polyolefin containing a carbonyl group in the molecule, and talc in amounts of 50 wt%, 20 wt%, 10 wt% and 20wt%, respectively, were dry blended, and kneaded with the use of a twin screw extruding machine ("TEX 30" made by Japan Steel Works, Ltd.) at a temperature of 220°C, and a resin composition A for foaming with a pellet shape was obtained. The obtained resin composition A for foaming was a resin composition in which particles of polylactic acid were dispersed in polypropylene.

(Production Example 2)

Polyethylene (PE), polylactic acid (PLA), modified polyolefin containing a carbonyl group in the molecule, and talc in amounts of 50 wt%, 20 wt%, 10 wt% and 20wt%, respectively, were dry blended, and kneaded with the use of a twin screw extruding machine ("TEX 30" made by Japan Steel Works, Ltd.) at a temperature of 220°C, and a resin composition B for foaming with a pellet shape was obtained. The obtained resin composition B for foaming was a resin composition in which particles of polylactic acid were dispersed in polyethylene.

In the following Table 1, the sources and physical properties of each material used in Production Examples 1 and 2 have been shown.

[Table 1]

| | Manufacturer/seller | | Product number | Physical properties |
|---|---|---|---|---|
| Polyolefin | Polypropylene | Prime Polymer Co., Ltd. | J106G | MFR (230°C): 15 g/10 min<br>Melt viscosity (220°C): 390 Pa·S |
| | Polyethylene | Tosoh Corporation | HDPE1000 | MFR (190°C): 20 g/10 min<br>Melt viscosity (220°C): 270 Pa·S |

(continued)

|  | Manufacturer/seller | | Product number | Physical properties |
|---|---|---|---|---|
| Polylactic acid | | UNITIKA LTD. | Terramac TE-2000 | MFR (190°C): 12 g/10 min<br>Melt viscosity (220°C): 260 Pa·S |
| Modified polyolefin containing carbonyl group in molecule | | Prime Polymer Co., Ltd. | ZP648 | MFR (230°C): 0.6 g/10 min |
| Layer silicate | Talc | NIPPON TALC Co., Ltd. | P-3 | Density: 2.70 g/cm$^3$ |

(Example 1)

The resin composition A for foaming with the pellet shape obtained in Production Example 1 was charged into an injection molding machine (made by Toshiba Machine Co., Ltd.) equipped with a supercritical generation device. A supercritical fluid of nitrogen (N2) was mixed into the resin composition for foaming which was melted in a cylinder set at a temperature of 200°C, under such conditions that a charged amount was 0.3 wt% and a charging pressure was 16 MPa. Incidentally, the charged amount (unit: wt%) of the supercritical fluid can be calculated by the following expression (1).

$$\text{Charged amount of supercritical fluid (Unit: wt\%)} = [(\text{flow rate of supercritical fluid} \times \text{inflow time of supercritical fluid} \times \text{conversion factor } 27.8) \div \text{weight of resin composition for foaming}] \times 100 \quad (1)$$

The obtained molten resin in which the supercritical fluid was mixed was injected into a cavity 33 in a metal mold having a shape shown in Figure 3 and Figure 4, under conditions that an injection speed was 120 mm/sec and a screw back pressure was 15 MPa. The minimum value of a gap distance of the metal mold in the cavity 33 before the core back was 0.8 mm. The mold temperature was 50°C. In Example 1, an asperity finish (graining finish) was applied by sandblasting, on the surfaces of the male mold 31 and the female mold 32, which face the cavities of the first region 33a, the second region 33b, the third region 33c and the fourth region 33d. The arithmetic mean roughness Ra of the surfaces which face the cavities in the first to fourth regions was 1.41 μm, and the ten-point mean roughness Rz of the surfaces was 8.48 μm or smaller. As for the roughness of the above described asperity finish, the arithmetic mean roughness Ra and the ten-point mean roughness Rz were measured at three arbitrarily selected positions in each of the first to fourth regions on which the asperity finish was applied, and the average values were calculated in the regions, respectively.

In addition, at the timing immediately after the charging of the molten resin into the cavity 33 was completed, the core back was carried out. Specifically, the volume of the cavity 33 was expanded by an operation of making the male mold 31 of the metal mold retreat by 3.0 mm, which promoted the foaming of the molten resin. After the solidification of the molten resin was completed, the container for foods was taken out, which was a foamed molded article.

The container for foods having depth produced in Example 1 had a bowl shape, had the structure shown in Figures 7 to 9, and was formed of the underside portion 10a, the lateral side portion 10c, and a curved side portion 10b which was arranged between the underside portion 10a and the lateral side portion 10c. In the container 10 for foods, a diameter φ2 of an opening was 120 mm, a height H2 was 80 mm, a curvature radius R2 was 30 mm, an angle θ3 formed between the lateral side portion 10c and the outer edge portion 10d was 100°, and an angle θ4 formed between a straight line along the lateral side portion 10c and a straight line along the underside portion 10a was 100°. The angle θ3 and the angle θ4 were set to be the same angle.

(Examples 2 to 6, and 9, and Comparative Examples 1 to 7)

In Examples 2 to 6, and 9, and Comparative Examples 1 to 7, containers for foods each having a bowl shape were prepared in a similar way to that in Example 1, except that the position at which the asperity finish was applied that was formed on the surface which faces the cavity of the metal mold, and the arithmetic mean roughness Ra and the ten-point mean roughness Rz of the above described asperity finish were changed, as shown in the following Table 2. Incidentally, a region other than the region in which the asperity finish was applied was subjected to mirror-like finishing of which the arithmetic mean roughness Ra was 0.03 μm and the ten-point mean roughness Rz was 0.27 μm.

(Examples 7 and 8)

In Examples 7 and 8, containers for foods each having a bowl shape were prepared in a similar way to that in Example 1, except that the resin composition B for foaming with the pellet shape was used, which was obtained in Production Example 2, and the position at which the asperity finish was applied, and the arithmetic mean roughness Ra and the ten-point mean roughness Rz of the above described asperity finish were changed, as shown in the following Table 2.

(Comparative Example 8)

In Comparative Example 8, a container for foods having a bowl shape was prepared in a similar way to that in Example 1, except that the above described asperity finishing was not applied, and all of the first, second, third and fourth regions were subjected to mirror-like finishing.

(Evaluation)

The metal molds which were used in preparation of the containers for foods in Examples and Comparative Examples were subjected to: evaluations of (1) filling properties and (2) mold releasability, as the moldability; and measurement of (3) solidification rate, by the following methods. In addition, the containers for foods, which were produced in Examples and Comparative Examples, were subjected to evaluations of (4) foaming properties, (5) heat insulating properties, and (6) appearance, by the following methods. As for (6) evaluation of appearance, (6-1) presence/absence of wrinkles of the surface and (6-2) presence/absence of blisters on the surface were separately evaluated. The results are shown in the following Table 2.

(1) Evaluation of filling properties

In each of Examples and Comparative Examples, 1000 shots of the above described molten resins were each charged into the metal mold by the above described supercritical injection molding method, the containers for foods were each taken out after the solidification of the above described molten resin was completed, and the presence or absence of a charging failure was visually checked. The case was evaluated as ○ in which no charging failure occurred in the 1000 shots, and the case was evaluated as × in which one or more charging failures occurred in the 1000 shots. Incidentally, the above described charging failure means that the molten resin does not spread to a part of the cavity, and there occurs a loss in the obtained container for foods.

(2) Evaluation of releasability

In each of Examples and Comparative Examples, 1000 shots of the above described molten resins were each charged into the metal mold by the above described supercritical injection molding method, the containers for foods were each taken out after the solidification of the above described molten resin was completed, and the presence or absence of stick in cavity was checked. The case was evaluated as ○ in which no stick in cavity occurred in the 1000 shots, and the case was evaluated as × in which one or more stick in cavity occurred in the 1000 shots. Incidentally, the above described stick in cavity means that when the container for foods is taken out from the metal mold, a part or the whole of the container for foods remains in the cavity, or that the container for foods is badly extracted from the metal mold, and the molded article is deformed.

(3) Solidification rate

In each of Examples and Comparative Examples, 1000 shots of the above described molten resins were each charged into the metal mold which was set at 50°C by the above described supercritical injection molding method, and were each cooled for 30 seconds, and then when the containers for foods were each taken out from the metal mold, the presence or absence of deformation was visually checked. The case was evaluated as ○ in which no deformation was recognized in the 1000 containers, and the case was evaluated as × in which one or more deformations were recognized in the 1000 containers.

#### (4) Foaming properties

The cross section of the container for foods was observed with SEM (S-4800 made by Hitachi High-Technologies Corporation), and the state of the foamed particles in the foamed layer was checked.

As for the evaluation of foaming properties, the container for foods was observed from the cross section; and the case was evaluated to be compliant in which 100 or more foamed particles existed in a range of 1 mm in length and 1 mm in width of the foamed layer, and an average particle size of arbitrarily selected 100 foamed particles was 100 $\mu$m or smaller, and the case was evaluated to be incompliant in which the average particle size of the foamed particles was larger than 100 $\mu$m.

#### (5) Evaluation of heat insulating properties

A sample for measurement, which was colored to black, was prepared by operations of spraying a black body spray ("THI-1B" made by Tasco Japan Co., Ltd.) to the container for foods, and then drying a solvent contained in the black body spray in a room under conditions of 12 hours or longer and 24 hours or shorter. Then, 100 ml of boiling hot water was poured into the sample for measurement, and after 3 minutes, the temperature of the outer surface of the sample for measurement was measured with the use of an infrared radiation thermometer ("TVS-200" made by Nippon Avionics Co., Ltd.) of which the emissivity was adjusted to 0.94. The case was evaluated as ○ in which the measured surface temperature was 65°C or lower, and the case was evaluated as × in which the measured surface temperature was higher than 65°C.

#### (6) Appearance evaluation

In each of the examples and comparative examples, 100 containers for foods were prepared, and the appearances thereof were visually checked. The cases in which the following determination was "◎" and "○" were evaluated to be acceptable, and the case in which the determination was "x" was evaluated to be unacceptable.

#### (6-1) Presence or absence of wrinkles of surface

The surface of the container for foods was visually observed, and the case was evaluated to be "◎" in which no wrinkles of the surface were recognized in any of the containers for foods, the case was evaluated to be "○" in which wrinkles of the surface were recognized in 1 or 2 containers for foods, and the case was evaluated to be "x" in which wrinkles of the surface were recognized in three or more containers for foods.

#### (6-2) Presence or absence of blisters on surface

The surface of the container for foods was visually observed, and the case was evaluated to be "◎" in which blisters on the surface were not recognized in any of the containers for foods, the case was evaluated to be "○" in which blisters on the surface were recognized in 1 or 2 containers for foods, and the case was evaluated to be "x" in which blisters on the surface were recognized in three or more containers for foods.

In the following Table 2, in the "region with asperity finish" under "structure of metal mold", the case is represented by "a" in which a region that was subjected to the asperity finishing was a surface that faces the cavity of the first region, the case was represented by "b" in which the region was a surface that faces the cavity of the second region, the case was represented by "c" in which the region was a surface that faces the cavity of the third region, and the case was represented by "d" in which the region was a surface that faces the cavity of the fourth region. For example, the case was represented by "b+c" in which the second region and the third region were subjected to the asperity finishing.

[Table 2]

| | Resin composition | Structure of metal mold | | Roughness of cavity surface | | Evaluation | | | | | |
| | | Region with asperity finish shape | | | | Moldability | | | Average particle diameter of foamed particles (μm) | Heat insulating properties | Appearance | |
| | | | Ra (μm) | Rz (μm) | Filling properties | Releasability | Solidification rate | | | Wrinkle | Blister |
|---|---|---|---|---|---|---|---|---|---|---|---|
| Example 1 | PP/PLA | a+b+c+d | 1.41 | 8.48 | ○ | ○ | ○ | 71 | ○ | ◎ | ◎ |
| Example 2 | PP/PLA | a+b+c | 1.17 | 7.72 | ○ | ○ | ○ | 78 | ○ | ◎ | ◎ |
| Example 3 | PP/PLA | b+c | 1.22 | 7.94 | ○ | ○ | ○ | 81 | ○ | ○ | ○ |
| Example 4 | PP/PLA | b+c | 0.54 | 2.38 | ○ | ○ | ○ | 63 | ○ | ○ | ○ |
| Example 5 | PP/PLA | b+c | 3.37 | 25.70 | ○ | ○ | ○ | 74 | ○ | ○ | ○ |
| Example 6 | PP/PLA | b+c | 5.72 | 42.70 | ○ | ○ | ○ | 64 | ○ | ◎ | ◎ |
| Example 7 | PE/PLA | b+c | 1.26 | 6.03 | ○ | ○ | ○ | 95 | ○ | ○ | ○ |
| Example 8 | PE/PLA | b+c | 5.72 | 42.70 | ○ | ○ | ○ | 87 | ○ | ◎ | ◎ |
| Example 9 | PP/PLA | b+c | 8.23 | 57.60 | ○ | ○ | ○ | 83 | ○ | ◎ | ○ |
| Comparative Example 1 | PP/PLA | a | 1.12 | 8.51 | ○ | ○ | ○ | 67 | ○ | × | × |
| Comparative Example 2 | PP/PLA | b | 1.25 | 9.19 | ○ | ○ | ○ | 81 | ○ | ○ | × |
| Comparative Example 3 | PP/PLA | c | 1.22 | 9.55 | ○ | × | ○ | 81 | ○ | × | × |
| Comparative Example 4 | PP/PLA | a+b | 1.26 | 9.04 | ○ | × | ○ | 66 | ○ | ○ | × |
| Comparative Example 5 | PP/PLA | a+c | 1.28 | 9.21 | ○ | ○ | ○ | 75 | ○ | × | × |
| Comparative Example 6 | PP/PLA | a+b+c+d | 0.34 | 1.97 | ○ | ○ | ○ | 88 | ○ | × | × |
| Comparative Example 7 | PP/PLA | a+b+c+d | 10.81 | 65.40 | × | × | ○ | 78 | ○ | ◎ | ○ |

(continued)

| | | Structure of metal mold | | | Evaluation | | | | | |
|---|---|---|---|---|---|---|---|---|---|---|
| | Resin composition | Region with asperity finish shape | Roughness of cavity surface | | Moldability | | | Average particle diameter of foamed particles (μm) | Heat insulating properties | Appearance |
| | | | Ra (μm) | Rz (μm) | Filling properties | Releasability | Solidification rate | | | Wrinkle | Blister |
| Comparative Example 8 | PP/PLA | No asperity finishing | - | - | ○ | × | ○ | 72 | ○ | × | × |

As is understood from Table 2, it has been found that by operations of applying the asperity finish on at least the second region which forms the curved side portion of the container for foods having the bowl shape and the third region which forms the lateral side portion, among the surfaces of the cavities of the metal molds which were used in Examples 1 to 9, and controlling the arithmetic mean roughness of the mold surfaces which face the cavities of the second region and the third region to 0.5 μm or larger and 10 μm or smaller, and the ten-point mean roughness thereof to 2 μm or larger and 60 μm or smaller, the heat insulating properties of the obtained container for foods having the bowl shape can become sufficient, and the occurrence of wrinkles and blisters that were the appearance defects could be suppressed. In addition, the metal molds used in Examples 1 to 9 were excellent in the filling properties and the releasability. It has been found from the results of Examples 1 to 3 that the wider the region is at which the asperity finish was applied, the better the occurrence of wrinkles and blisters can be suppressed. On the other hand, in Comparative Examples 1 to 5 in which the asperity finish was not applied in both of the second region and the third region in the cavity of the metal mold, the occurrence of wrinkles and blisters could not be sufficiently suppressed. In addition, in Comparative Example 7 in which the asperity finish was applied on both of the second region and the third region in the cavity of the metal mold and the asperity finish was roughened, the filling properties and the releasability of the metal mold were lowered, and wrinkles occurred in the obtained container for foods. In Comparative Example 8 in which the asperity finish was not applied in any of the first to fourth regions, the releasability of the metal mold was lowered, and wrinkles and blisters occurred in the obtained container for foods.

Reference Signs List

| | |
|---|---|
| 10 | Container for foods |
| 10a | Underside portion |
| 10b | Curved side portion |
| 10c | Lateral side portion |
| 10d | Outer edge portion |
| 11 | Skin layer (outer skin layer) |
| 12 | Foamed layer |
| 20 | Supercritical injection molding apparatus |
| 21 | Hopper |
| 22 | Heating cylinder |
| 23 | Screw |
| 24 | Nozzle |
| 25 | Cylinder |
| 26 | Supercritical fluid generation unit |
| 27 | Injection control unit |
| 30 | Metal mold |
| 31 | Male mold |
| 32 | Female mold |
| 33 | Cavity |
| 33a | First region |
| 33b | Second region |
| 33c | Third region |
| 33d | Fourth region |
| 34 | Runner |
| 35 | Resin injection port |

**Claims**

1. A method for producing a container for foods (10) having depth, by injection molding a molten resin that contains a supercritical fluid and a resin composition into a cavity (33) in a metal mold (30),

comprising a step of moving a part of the metal mold (30) to expand a volume of the cavity (33), before the molten resin is solidified which has been charged into the cavity (33), wherein the cavity (33) comprises a first region that forms an underside portion (10a) of the container for foods (10) having depth, a second region (33b) that forms a curved side portion (10b), and a third region (33c) that forms a lateral side portion (10c), from a resin injection port (35) toward a flow end, and wherein
mold surfaces that face the cavity (33) of the second region (33b) and the third region (33c) have an asperity shape formed thereon which has an arithmetic mean roughness of 0.5 µm or larger and 10 µm or smaller, and a ten-point mean roughness of 2 µm or larger and 60 µm or smaller.

2. The method for producing the container for foods (10) according to claim 1, wherein the mold surfaces that face the cavity (33) of the second region (33b) and the third region (33c) have the arithmetic mean roughness of 0.5 µm or larger and 6 µm or smaller, and the ten-point mean roughness of 2 µm or larger and 50 µm or smaller.

3. The method for producing the container for foods (10) according to claim 1 or 2, wherein the mold surface that faces the cavity (33) of the first region (33a) has the arithmetic mean roughness of 0.5 µm or larger and 10 µm or smaller.

4. The method for producing the container for foods (10) according to claim 3, wherein the mold surface that faces the cavity (33) of the first region (33a) has the arithmetic mean roughness of 0.5 µm or larger and 6 µm or smaller.

5. The method for producing the container for foods (10) according to any one of claims 1 to 4, wherein

the cavity (33) further comprises a fourth region (33d) that forms an outer edge portion (10d) which is arranged so as to form an angle with the lateral side portion (10c), from the lateral side portion (10c) toward the flow end, and wherein
the mold surface that faces the cavity (33) of the fourth region (33d) has the arithmetic mean roughness of 0.5 µm or larger and 10 µm or smaller.

6. The method for producing the container for foods (10) according to claim 5, wherein the mold surface that faces the cavity (33) of the fourth region (33d) has the arithmetic mean roughness of 0.5 µm or larger and 6 µm or smaller.

7. The method for producing the container for foods (10) according to any one of claims 1 to 6, wherein an average particle diameter of foamed particles in a cross section of the container for foods (10) having depth is 100 µm or smaller.

8. The method for producing the container for foods (10) according to any one of claims 1 to 7, wherein an angle formed by a straight line along the first region (33a) and a straight line along the third region (33c) is 95° to 135°.

9. The method for producing the container for foods (10) according to any one of claims 1 to 8, wherein the asperity shapes formed on the mold surfaces that face the cavity (33) of the second region (33b) and the third region (33c) are arranged so as to be symmetric with respect to the resin injection port (35).

10. The method for producing the container for foods (10) according to any one of claims 1 to 9, wherein the resin composition contains at least polyolefin and polylactic acid.


**Patentansprüche**

1. Verfahren zur Herstellung eines Behälters für Nahrungsmittel (10), der eine Tiefe aufweist, durch Spritzgießen eines geschmolzenen Harzes, das ein superkritisches Fluid enthält, und einer Harzzusammensetzung in einen Hohlraum (33) in einer Metallform (30),

wobei das Verfahren einen Schritt des Bewegens eines Teils der Metallform (30) umfasst, um ein Volumen des Hohlraums (33) zu vergrößern, bevor das geschmolzene Harz, mit dem der Hohlraum (33) befüllt wurde, gehärtet ist, wobei
der Hohlraum (33) einen ersten Bereich, der einen Unterseitenabschnitt (10a) des Behälters für Nahrungsmittel (10), der eine Tiefe aufweist, ausbildet, einen zweiten Bereich (33b), der einen gekrümmten Seitenabschnitt (10b) ausbildet, und einen dritten Bereich (33c), der einen lateralen Seitenabschnitt (10c) ausbildet, von einer Harzeinspritzöffnung (35) in Richtung eines Strömungsendes umfasst und wobei
Formflächen, die dem Hohlraum (33) des zweiten Bereichs (33b) und des dritten Bereichs (33c) zugewandt sind, eine darauf ausgebildete Rauheitsform aufweisen, die eine arithmetische mittlere Rauheit von 0,5 µm oder mehr und 10 µm oder weniger und eine mittlere Zehnpunkt-Rauheit von 2 µm oder mehr und 60 µm oder weniger aufweist.

**2.** Verfahren zur Herstellung eines Behälters für Nahrungsmittel (10) nach Anspruch 1, wobei die Formflächen, die dem Hohlraum (33) des zweiten Bereichs (33b) und des dritten Bereichs (33c) zugewandt sind, die arithmetische mittlere Rauheit von 0,5 $\mu$m oder mehr und 6 $\mu$m oder weniger und die mittlere Zehnpunkt-Rauheit von 2 $\mu$m oder mehr und 50 $\mu$m oder weniger aufweist.

**3.** Verfahren zur Herstellung eines Behälters für Nahrungsmittel (10) nach Anspruch 1 oder 2, wobei die Formfläche, die dem Hohlraum (33) des ersten Bereichs (33a) zugewandt ist, die mittlere arithmetische Rauheit von 0,5 $\mu$m oder mehr und 10 $\mu$m oder weniger aufweist.

**4.** Verfahren zur Herstellung eines Behälters für Nahrungsmittel (10) nach Anspruch 3, wobei die Formfläche, die dem Hohlraum (33) des ersten Bereichs (33a) zugewandt ist, die arithmetische mittlere Rauheit von 0,5 $\mu$m oder mehr und 6 $\mu$m oder weniger aufweist.

**5.** Verfahren zur Herstellung eines Behälters für Nahrungsmittel (10) nach einem der Ansprüche 1 bis 4, wobei

der Hohlraum (33) ferner einen vierten Bereich (33d) umfasst, der einen Außenrandabschnitt (10d) ausbildet, der angeordnet ist, um mit dem lateralen Seitenabschnitt (10c) von dem lateralen Seitenabschnitt (10c) in Richtung des Strömungsendes einen Winkel zu bilden, und wobei
die Formfläche, die dem Hohlraum (33) des vierten Bereichs (33d) zugewandt ist, die arithmetische mittlere Rauheit von 0,5 $\mu$m oder mehr und 10 $\mu$m oder weniger aufweist.

**6.** Verfahren zur Herstellung eines Behälters für Nahrungsmittel (10) nach Anspruch 5, wobei die Formfläche, die dem Hohlraum (33) des vierten Bereichs (33d) zugewandt ist, die arithmetische mittlere Rauheit von 0,5 $\mu$m oder mehr und 6 $\mu$m oder weniger aufweist.

**7.** Verfahren zur Herstellung eines Behälters für Nahrungsmittel (10) nach einem der Ansprüche 1 bis 6, wobei ein durchschnittlicher Teilchendurchmesser von geschäumten Teilchen in einem Querschnitt des Behälters für Nahrungsmittel (10), der eine Tiefe aufweist, 100 $\mu$m oder kleiner ist.

**8.** Verfahren zur Herstellung eines Behälters für Nahrungsmittel (10) nach einem der Ansprüche 1 bis 7, wobei ein Winkel, der durch eine Gerade entlang des ersten Bereichs (33a) und eine Gerade entlang des dritten Bereichs (33c) gebildet wird, 95° bis 135° beträgt.

**9.** Verfahren zur Herstellung eines Behälters für Nahrungsmittel (10) nach einem der Ansprüche 1 bis 8, wobei die Rauheitsformen, die auf den Formflächen ausgebildet sind, die dem Hohlraum (33) des zweiten Bereichs (33b) und des dritten Bereichs (33c) zugewandt sind, so angeordnet sind, dass sie in Bezug auf die Harzeinspritzöffnung (35) symmetrisch sind.

**10.** Verfahren zur Herstellung eines Behälters für Nahrungsmittel (10) nach einem der Ansprüche 1 bis 9, wobei die Harzzusammensetzung zumindest Polyolefin und Polymilchsäure enthält.

**Revendications**

**1.** Procédé de production d'un récipient pour aliments (10) ayant une profondeur, en moulant par injection une résine fondue qui contient un fluide supercritique et une composition de résine dans une cavité (33) dans un moule métallique (30),

comprenant une étape de déplacement d'une partie du moule métallique (30) pour dilater un volume de la cavité (33), avant que la résine fondue soit solidifiée qui a été chargée dans la cavité (33), dans lequel
la cavité (33) comprend une première région qui forme une partie inférieure (10a) du récipient pour aliments (10) ayant une profondeur, une deuxième région (33b) qui forme une partie de côté incurvé (10b), et une troisième région (33c) qui forme une partie de côté latéral (10c), depuis un orifice d'injection de résine (35) vers une extrémité d'écoulement, et dans lequel
des surfaces de moule qui font face à la cavité (33) de la deuxième région (33b) et de la troisième région (33c) ont une forme d'aspérité formée sur celles-ci qui a une rugosité moyenne arithmétique de 0,5 $\mu$m ou plus et de 10 $\mu$m ou moins, et une rugosité moyenne en dix points de 2 $\mu$m ou plus et de 60 $\mu$m ou moins.

**2.** Procédé de production du récipient pour aliments (10) selon la revendication 1, dans lequel les surfaces de moule qui font face à la cavité (33) de la deuxième région (33b) et de la troisième région (33c) ont la rugosité moyenne arithmétique de 0,5 µm ou plus et de 6 µm ou moins, et la rugosité moyenne en dix points de 2 µm ou plus et de 50 µm ou moins.

**3.** Procédé de production du récipient pour aliments (10) selon la revendication 1 ou 2, dans lequel la surface de moule qui fait face à la cavité (33) de la première région (33a) a la rugosité moyenne arithmétique de 0,5 µm ou plus et de 10 µm ou moins.

**4.** Procédé de production du récipient pour aliments (10) selon la revendication 3, dans lequel la surface de moule qui fait face à la cavité (33) de la première région (33a) a la rugosité moyenne arithmétique de 0,5 µm ou plus et de 6 µm ou moins.

**5.** Procédé de production du récipient pour aliments (10) selon l'une quelconque des revendications 1 à 4, dans lequel

la cavité (33) comprend en outre une quatrième région (33d) qui forme une partie de bord extérieur (10d) qui est agencée de manière à former un angle avec la partie de côté latéral (10c), depuis la partie de côté latéral (10c) vers l'extrémité d'écoulement, et dans lequel
la surface de moule qui fait face à la cavité (33) de la quatrième région (33d) a la rugosité moyenne arithmétique de 0,5 µm ou plus et de 10 µm ou moins.

**6.** Procédé de production du récipient pour aliments (10) selon la revendication 5, dans lequel la surface de moule qui fait face à la cavité (33) de la quatrième région (33d) a la rugosité moyenne arithmétique de 0,5 µm ou plus et de 6 µm ou moins.

**7.** Procédé de production du récipient pour aliments (10) selon l'une quelconque des revendications 1 à 6, dans lequel un diamètre de particules moyen de particules expansées dans une coupe transversale du récipient pour aliments (10) ayant une profondeur est de 100 µm ou moins.

**8.** Procédé de production du récipient pour aliments (10) selon l'une quelconque des revendications 1 à 7, dans lequel un angle formé par une ligne droite le long de la première région (33a) et une ligne droite le long de la troisième région (33c) est de 95° à 135°.

**9.** Procédé de production du récipient pour aliments (10) selon l'une quelconque des revendications 1 à 8, dans lequel les formes d'aspérité formées sur les surfaces de moule qui font face à la cavité (33) de la deuxième région (33b) et de la troisième région (33c) sont agencées de manière à être symétriques par rapport à l'orifice d'injection de résine (35).

**10.** Procédé de production du récipient pour aliments (10) selon l'une quelconque des revendications 1 à 9, dans lequel la composition de résine contient au moins une polyoléfine et de l'acide polylactique.

[Figure 1]

[Figure 2]

(a)

(b)

BEFORE CORE BACK

AFTER CORE BACK

[Figure 3]

[Figure 4]

[Figure 5]

[Figure 6]

[Figure 7]

[Figure 8]

[Figure 9]

<u>10</u>

$\phi 2$

[Figure 10]

<u>10</u>

11

12

11

[Figure 11]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002067111 A
- JP 2003231148 A
- JP 5283710 B
- JP 2006056008 A